# EUROPEAN PATENT APPLICATION

(11) **EP 4 844 577 A1**
(43) Date of publication of application: **25.11.2026**
(21) Application number: 25226571.5
(22) Date of filing: 22.12.2025
(51) Int. Cl.: G06F 9/451, G06N 20/00, G06F 3/0484, G06V 10/74, G06F 8/34, G06F 3/048

(54) **ROBOTIC PROCESS AUTOMATION (RPA) DYNAMIC APPLICATION STATE READINESS DETECTION SYSTEMS AND METHODS**

(30) Priority: 19.05.2025 US 202519211955
(71) Applicant: UiPath, Inc., New York NY 10017 (US)
(72) Inventor: SULTANA, Bogdan Alexandru Cristian, New York, 10017 (US)
(74) Representative: Ungria López, Javier

(57) **Abstract**

The progress of graphical user interface (GUI) loading in Robotic Process Automation (RPA) is monitored in real time by visual analysis. A current GUI image is compared to a baseline snapshot representing the GUI in a loaded state. A relevance ranking of GUI elements/fields defining a loaded state is generated at design time by a large language model (LLM), and used to characterize the loading state at runtime. Pixel change detection triggers a visual analysis flow, performed repeatedly as the user interface loads. Loading state monitoring is performed by a simple automatic default process and/or by a user-inserted complete analysis process. Dynamic loading state monitoring allows reduced errors and improved productivity at the cost of additional processing.

## Description

### BACKGROUND OF THE INVENTION

The invention relates to robotic process automation (RPA), and in particular to facilitating the development and use of RPA software.

RPA is an emerging field of information technology aimed at improving productivity by automating repetitive office computing tasks, thus freeing human operators to perform more intellectually sophisticated and/or creative activities. Notable tasks targeted for automation include extracting structured data from documents and interacting with user interfaces, for instance filling forms, among others.

RPA generally involves two stages: design time and run time. At design time, a user traces a sequence of steps using an RPA design application (e.g. UiPath StudioX) in order to generate an RPA specification. At runtime, the RPA specification is run by an RPA robot so as to execute the sequence of steps defined by the RPA specification.

Automating software tasks may pose substantial technical challenges. In general, the types and behaviors of user interfaces targeted for automation may be extremely diverse, from webpages of varying complexity to applications such as spreadsheets, calendars, calculators, customer relationship management software (e.g., Salesforce^{®} Platform from Salesforce, Inc.), enterprise resource planning software (e.g., SAP^{®}), etc. The behavior, including latency of applications, and in particular applications having remote/cloud components, may vary over time and/or execution platform.

Generally, automation is subject to a tradeoff between efficiency and reliability. Efficient operation may not be ideally reliable, and improving reliability can reduce the efficiency of the automation process.

### SUMMARY OF THE INVENTION

According to one aspect, a method comprises employing at least one hardware processor of a computer system to receive a workflow specification for a Robotic Process Automation (RPA) workflow to be executed by an RPA robot, the workflow including an activity, the activity acting on an activity target within a user interface; repeatedly perform a visual comparison of a current user interface screenshot to a design-time baseline screenshot to determine a real-time measure of loading of the user interface, the design-time baseline screenshot representing the user interface in a fully-loaded state; and initiate a selector search for the activity target within the user interface in response to determining according to the visual comparison that the user interface has sufficiently loaded.

According to another aspect, a computer system comprises at least one hardware processor configured to receive a workflow specification for a Robotic Process Automation (RPA) workflow to be executed by an RPA robot, the workflow including an activity, the activity acting on an activity target within a user interface; repeatedly perform a visual comparison of a current user interface screenshot to a design-time baseline screenshot to determine a real-time measure of loading of the user interface, the design-time baseline screenshot representing the user interface in a fully-loaded state; and initiate a selector search for the activity target within the user interface in response to determining according to the visual comparison that the user interface has sufficiently loaded.

According to another aspect, a non-transitory computer-readable medium stores instructions which, when executed by at least one hardware processor of a computer system, cause the computer system to receive a workflow specification for a Robotic Process Automation (RPA) workflow to be executed by an RPA robot, the workflow including an activity, the activity acting on an activity target within a user interface; repeatedly perform a visual comparison of a current user interface screenshot to a design-time baseline screenshot to determine a real-time measure of loading of the user interface, the design-time baseline screenshot representing the user interface in a fully-loaded state; and initiate a selector search for the activity target within the user interface in response to determining according to the visual comparison that the user interface has sufficiently loaded.

### BRIEF DESCRIPTION OF DRAWINGS

The foregoing aspects and advantages of the present invention will become better understood upon reading the following detailed description and upon reference to the drawings where:
Fig. **1** shows an architectural diagram of a hyper-automation system according to some embodiments of the present invention.
Fig. **2** illustrates an exemplary RPA system according to some embodiments of the present invention.
Fig. **3** shows an exemplary deployed RPA system executing in a client-server configuration according to some embodiments of the present invention.
Fig. **4** illustrates an exemplary data exchange between an RPA conductor and RPA robot(s) according to some embodiments of the present invention.
Fig. **5** illustrates an exemplary design-time user interface according to some embodiments of the present invention.
Fig. **6-A** shows an exemplary partially-loaded user interface according to some embodiments of the present invention.
Fig. **6-B** shows an exemplary completely-loaded user interface according to some embodiments of the present invention.
Fig. **7-A** illustrates a set of runtime components of an RPA application configured to execute an RPA specification according to some embodiments of the present invention.
Fig. **7-B** shows a set of design-time components or an RPA application configured to generate an RPA specification according to some embodiments of the present invention.
Fig. **7-C** illustrates a set of runtime components of an RPA application configured to execute an RPA specification according to some embodiments of the present invention.
Fig. **8-A** shows a runtime timing diagram illustrating an exemplary RPA activity execution sequence including timeout values according to some embodiments of the present invention.
Fig. **8-B** illustrates an exemplary measured evolution of a loading fraction of a user interface over time according to some embodiments of the present invention.
Fig. **9** shows an exemplary sequence of steps performed by an RPA design application at design-time, according to some embodiments of the present invention.
Fig. **10** shows an exemplary sequence of steps performed by an RPA robot at runtime according to some embodiments of the present invention.
Fig. **11** shows an exemplary hardware configuration of a computer system programmed to execute some of the methods described herein.

### DETAILED DESCRIPTION OF THE INVENTION

In the following description, it is understood that all recited connections between structures can be direct operative connections or indirect operative connections through intermediary structures. A set of elements includes one or more elements. Any recitation of an element is understood to refer to at least one element. A plurality of elements includes at least two elements. Any use of 'or' is meant as a nonexclusive or. Unless otherwise required, any described method steps need not be necessarily performed in a particular illustrated order. A first element (e.g., data) derived from a second element encompasses a first element equal to the second element, as well as a first element generated by processing the second element and optionally other data. Making a determination or decision according to a parameter encompasses making the determination or decision according to the parameter and optionally according to other data. Unless otherwise specified, an indicator of some quantity/data may be the quantity/data itself, or an indicator different from the quantity/data itself. A computer program is a sequence of processor instructions carrying out a task. Computer programs described in some embodiments of the present invention may be stand-alone software entities or sub-entities (e.g., subroutines, libraries) of other computer programs. The term "database" is used herein to denote any organized, searchable collection of data. Computer-readable media encompass non-transitory media such as magnetic, optic, and semiconductor storage media (e.g. hard drives, optical disks, flash memory, DRAM), as well as communication links such as conductive cables and fiber optic links. According to some embodiments, the present invention provides, *inter alia,* computer systems comprising hardware (e.g. one or more processors) programmed to perform the methods described herein, as well as computer-readable media encoding instructions to perform the methods described herein. Unless otherwise specified, the term RPA activity is used below to refer to the basic unit of an RPA workflow defined at design time and commonly incorporated into a workflow by a user, while the term RPA action refers to actions with potentially different levels of granularity that may be involved in executing RPA activities. As an example, an exemplary RPA activity may be a click on a user interface element or entering a value in a text field of a user interface, while associated RPA actions may include determining whether the user interface has loaded sufficiently, performing one or more selector searches for the RPA target user interface element, entering a desired value in a target text field, and pressing enter.

The following description illustrates embodiments of the invention by way of example and not necessarily by way of limitation.

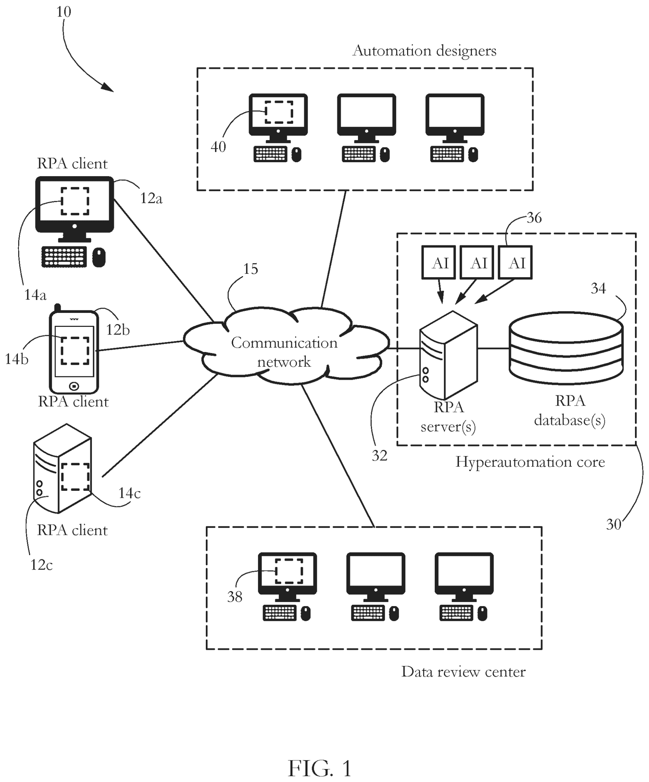

Fig. 1 is an architectural diagram illustrating a hyper-automation system **10** according to some embodiments of the present invention. 'Hyper-automation' as used herein refers to extended automation systems that bring together components of robotic process automation (RPA), integration tools, and technologies that amplify the ability to automate work. RPA herein denotes automatically carrying out a computing task by mimicking a sequence of actions of a human operator using a set of software tools to perform the respective task. In an exemplary scenario, a company employee uses business software to issue invoices to clients, which may involve a sequence of actions such as opening a Microsoft Excel^{®} spreadsheet, looking up company details of a client, copying the respective details into an invoice template, filling out invoice fields indicating the purchased items, switching over to an email application, composing an email message to the respective client, attaching the newly created invoice to the respective email message, and clicking a 'Send' button. An RPA robot may effectively reproduce the same sequence of actions, therefore automating the respective invoicing task. Mimicking a human operation/action is herein understood to encompass reproducing the sequence of computing events that occur when a human operator performs the respective operation/action on the computer, as well as reproducing a result of the human operator's performing the respective operation on the computer. For instance, mimicking an action of clicking a button of a graphical user interface (GUI) may comprise having the operating system move the mouse pointer to the respective button and generating a mouse click event, or may alternatively comprise toggling the respective GUI button itself to a clicked state.

Exemplary processes targeted by RPA include processing of payments, invoicing, communicating with business clients (e.g., distribution of newsletters and/or product offerings), internal communication (e.g., memos, scheduling of meetings and/or tasks), auditing, and payroll processing, among others.

RPA may constitute the core of hyper-automation system **10,** and in certain embodiments, automation capabilities may be expanded with artificial intelligence (Al)/machine learning (ML), process mining, analytics, and/or other advanced tools. As hyper-automation system 10 learns processes, trains AI/ML models, and employs analytics, for example, more and more knowledge work may be automated, and computing systems in an organization, e.g., both those used by individuals and those that run autonomously, may all be engaged to be participants in the hyper-automation process. Hyper-automation systems of some embodiments allow users and organizations to efficiently and effectively discover, understand, optimize, and scale automations.

Exemplary hyper-automation system **10** includes RPA client computing systems **12a-c,** such as a desktop computer, tablet computer, and smart phone, among others. Any desired client computing system may be used without deviating from the scope of the invention including, but not limited to, smart watches, laptop computers, servers, Internet-of-Things (IoT) devices, etc. Also, while Fig. **1** shows only three client computing systems **12a-c,** any suitable number of client computing systems may be used without deviating from the scope of the invention. For instance, in some embodiments, dozens, hundreds, thousands, or millions of client computing systems may be used. Client computing systems **12a-c** may be actively used by a user or run automatically without much or any user input.

Each illustrated client computing system **12a-c** has respective automation module(s) **14a-c** running thereon. Exemplary automation module(s) **14a-c** may include, but are not limited to, RPA robots, parts of an operating system, downloadable application(s) for the respective computing system, any other suitable software and/or hardware, or any combination of these without deviating from the scope of the invention.

In some embodiments, one or more of module(s) **14a-c** may be listeners. Listeners monitor and record data pertaining to user interactions with respective computing systems and/or operations of unattended computing systems and send the data to a hyper-automation core system **30** via a communication network **15** (e.g., a local area network - LAN, a mobile communications network, a satellite communications network, the Internet, any combination thereof, etc.). The data may include, but is not limited to, which buttons were clicked, where a mouse was moved, the text that was entered in a field, that one window was minimized and another was opened, the application associated with a window, etc. In certain embodiments, the data from such listener processes may be sent periodically as part of a heartbeat message, or in response to a fulfillment of a data accumulation condition. One or more RPA servers **32** receive and store data from the listeners in a database, such as RPA database(s) **34** in Fig. **1****.**

Other exemplary automation module(s) **14a-c** may execute the logic that actually implements the automation of a selected process. Stated otherwise, at least one automation module **14a-c** may comprise a part of an RPA robot as further described below. Robots may be attended (i.e., requiring human intervention) or unattended. In some embodiments, multiple modules **14a-c** or computing systems may participate in executing the logic of an automation. Some automations may orchestrate multiple modules **14a-c,** may carry out various background processes and/or may perform Application Programming Interface (API) calls. Some robotic activities may cause a module **14a-c** to wait for a selected task to be completed (possibly by another entity or automation module) before resuming the current workflow.

In some embodiments, hyper-automation core system **30** may run a conductor application on one or more servers, such as RPA server(s) **32.** While Fig. 1 shows only one RPA server **32,** multiple or many servers that are proximate to one another or in a distributed architecture may be employed without deviating from the scope of the invention. For instance, one or more of RPA server(s) **32** may be provided for conductor functionality, AI/ML model serving, authentication, governance, and or any other suitable functionality without deviating from the scope of the invention. In some embodiments, hyper-automation core system **30** may incorporate or be part of a public cloud architecture, a private cloud architecture, a hybrid cloud architecture, etc. In certain embodiments, hyper-automation core system **30** may host multiple software-based servers on one or more computing systems, such as RPA server(s) **32.** In some embodiments, one or more servers of core hyper-automation system **30,** such as RPA server(s) **32,** may be implemented via one or more virtual machines (VMs).

In some embodiments, one or more of automation modules **14a-c** may call one or more Al/ML models **36** deployed on or accessible by hyper-automation core **30.** Al/ML models **36** may be trained for any suitable purpose without deviating from the scope of the invention. Two or more of Al/ML models **36** may be chained in some embodiments (e.g., in series, in parallel, or a combination thereof) such that they collectively provide collaborative output(s). Exemplary Al/ML models **36** may perform or assist with computer vision (CV), optical character recognition (OCR), document processing and/or understanding, semantic learning and/or analysis, analytical predictions, process discovery, task mining, testing, automatic RPA workflow generation, sequence extraction, clustering detection, audio-to-text translation, any combination thereof, etc. However, any desired number and/or type(s) of Al/ML models **36** may be used without deviating from the scope of the invention. Using multiple AI/ML models **36** may allow the system to develop a global picture of what is happening on a given computing system, for example. For instance, one Al/ML model could perform OCR, another could detect buttons, another could compare sequences, etc. Patterns may be determined individually by an Al/ML model or collectively by multiple AI/ML models. In certain embodiments, one or more Al/ML models **36** are deployed locally on at least one of RPA client computing systems **12a-c.**

Hyper-automation system **10** may provide at least four main groups of functionality: (1) discovery; (2) building automations; (3) management; and (4) engagement. The discovery functionality may discover and provide automatic recommendations for different opportunities of automations of business processes. Such functionality may be implemented by one or more servers, such as RPA server **32.** The discovery functionality may include providing an automation hub, process mining, task mining, and/or task capture in some embodiments.

The automation hub (e.g., UiPath Automation Hub^{™}) may provide a mechanism for managing automation rollout with visibility and control. Automation ideas may be crowdsourced from employees via a submission form, for example. Feasibility and return on investment (ROI) calculations for automating these ideas may be provided, documentation for future automations may be collected, and collaboration may be provided to get from automation discovery to build-out faster.

Process mining (e.g., via UiPath Automation Cloud^{™} and/or UiPath Al Center^{™}) refers to the process of gathering and analyzing the data from applications (e.g., enterprise resource planning (ERP) applications, customer relation management (CRM) applications, email applications, call center applications, etc.) to identify what end-to-end processes exist in an organization and how to automate them effectively, as well as indicate what the impact of the automation will be. This data may be gleaned from RPA clients **12a-c** by listeners, for example, and processed by RPA server(s) **32.** One or more Al/ML models **36** may be employed for this purpose. This information may be exported to the automation hub to speed up implementation and avoid manual information transfer. The goal of process mining may be to increase business value by automating processes within an organization. Some examples of process mining goals include, but are not limited to, increasing profit, improving customer satisfaction, regulatory and/or contractual compliance, improving employee efficiency, etc.

Task mining (e.g., via UiPath Automation Cloud^{™} and/or UiPath Al Center^{™}) identifies and aggregates workflows (e.g., employee workflows), and then applies AI to expose patterns and variations in day-to-day tasks, scoring such tasks for ease of automation and potential savings (e.g., time and/or cost savings). One or more Al/ML models **36** may be employed to uncover recurring task patterns in the data. Repetitive tasks that are ripe for automation may then be identified. This information may initially be provided by listener modules (e.g., automation modules **14a-c)** and analyzed on servers of hyper-automation core **30.** The findings from task mining process may be exported to process documents or to an RPA design application such as UiPath Studio^{™} to create and deploy automations more rapidly.

Task mining in some embodiments may include taking screenshots with user actions (e.g., mouse click locations, keyboard inputs, application windows and graphical elements the user was interacting with, timestamps for the interactions, etc.), collecting statistical data (e.g., execution time, number of actions, text entries, etc.), editing and annotating screenshots, specifying types of actions to be recorded, etc.

Task capture (e.g., via UiPath Automation Cloud^{™} and/or UiPath Al Center^{™}) automatically documents attended processes as users work or provides a framework for unattended processes. Such documentation may include desired tasks to automate in the form of process definition documents (PDDs), skeletal workflows, capturing actions for each part of a process, recording user actions and automatically generating a comprehensive workflow diagram including the details about each step, Microsoft Word^{®} documents, XAML files, and the like. Build-ready workflows may be exported directly to an RPA design application, such as UiPath Studio^{™}. Task capture may simplify the requirements gathering process for both subject matter experts explaining a process and Center of Excellence (CoE) members providing production-grade automations.

The automation-building functionality of hyper-automation system **10** may be accomplished via a computer program, illustrated as an RPA design application **40** in Fig. **1****.** Examples include UiPath Studio^{™}, UiPath StudioX^{™}, or UiPath Web^{™}, among others. Such computer programs may be used to build and test automations for various applications and environments, such as web, mobile, SAP^{®}, and virtualized desktops. In some embodiments, RPA design application **40** enables a human developer to design a *workflow* that effectively automates a target work process. A workflow typically comprises a sequence of custom automation steps, herein deemed *RPA activities.* Each activity includes at least one action performed by the robot, such as clicking a button, reading a file, writing to a spreadsheet cell, etc. Activities may be nested and/or embedded. In some embodiments, RPA design application **40** exposes a design interface and set of tools that give the developer control of the execution order and the relationship between activities of a workflow. In some embodiments, predefined activities, drag-and-drop modeling, and a workflow recorder may make automation easier with minimal coding. Document understanding functionality may be provided by Al activities for data extraction and interpretation that call one or more AI/ML models **36.** Such automations may process virtually any document type and format, including tables, webpages, forms, signatures, and handwriting.

RPA design application **40** may also be used to seamlessly combine user interface (UI) automation with API automation, for example to provide API integration with various other applications, technologies, and platforms. A repository (e.g., UiPath Object Repository^{™}) or marketplace (e.g., UiPath Marketplace^{™}) for pre-built RPA and AI templates and solutions may be provided to allow developers to automate a wide variety of processes more quickly. Thus, when building automations, hyper-automation system **10** may provide user interfaces, development environments, API integration, pre-built and/or custom-built AI/ML models, development templates, integrated development environments (IDEs), and advanced Al capabilities. Hyper-automation system **10** may further enable deployment, management, configuration, monitoring, debugging, and maintenance of RPA robots for carrying out the automations designed using application **40.**

The management functionality of hyper-automation system **10** may provide deployment, orchestration, test management, Al functionality, and optimization of automations across an organization. One example of management functionality comprises the optimization of form-filling strategies and maintaining a centralized form-filling strategy knowledgebase as described herein. Other exemplary management functionality includes DevOps activities such as continuous integration and continuous deployment of automations. Management functionality may also act as an integration point with third-party solutions and applications for automation applications and/or RPA robots.

As an example of management functionality, a conductor application or service may facilitate provisioning, deployment, configuration, queuing, monitoring, logging, and interconnectivity of RPA robots, among others. Examples of such conductor applications/services include UiPath Orchestrator^{™} (which may be provided as part of the UiPath Automation Cloud^{™} or on premises, inside a virtual machine, or as a cloud-native single container suite via UiPath Automation Suite^{™}). A test suite of applications/services (e.g., UiPath Test Suite^{™}) may further provide test management to monitor the quality of deployed automations. The test suite may facilitate test planning and execution, meeting of requirements, and defect traceability. The test suite may include comprehensive test reporting.

Analytics software (e.g., UiPath Insights^{™}) may track, measure, and manage the performance of deployed automations. The analytics software may align automation operations with specific key performance indicators (KPIs) and strategic outcomes for an organization. The analytics software may present results in a dashboard format for better understanding by human users.

Al management functionality may be provided by an Al center (e.g., UiPath AI Center^{™}), which facilitates incorporation of AI/ML models into automations. Pre-built AI/ML models, model templates, and various deployment options may make such functionality accessible even to those who are not data scientists. Deployed automations (e.g., RPA robots) may call Al/ML models **36** from the AI center. Performance of the Al/ML models may be monitored. Models **36** may be trained and improved using human-validated data, such as that provided by a data review center as illustrated in Fig. 1. Human reviewers may provide labeled data (e.g., a training corpus) to hyper-automation core **30** via a review application **38** executing on a computer connected to network 15. Reviewers may also use application **38** to validate that predictions by AI/ML models **36** are accurate, and provide corrections otherwise. This dynamic input may then be saved as training data for retraining Al/ML models **36,** and may be stored in a database such as RPA database **34,** for example. The Al center may schedule and execute training jobs to train the new versions of Al/ML models **36** using the training data.

The engagement functionality of hyper-automation system **10** engages humans and automations as one team for seamless collaboration on desired processes. Low-code applications may be built (e.g., via UiPath Apps^{™}) to connect to browser and legacy software. Applications may be created quickly using a web browser through a rich library of drag-and-drop controls, for instance. An application can be connected to a single automation or multiple automations. An action center (e.g., UiPath Action Center^{™}) may provide a mechanism to hand off processes from robots to humans, and vice versa. Humans may provide approvals or escalations, make exceptions, etc. RPA robots may then perform the automatic functionality of a given workflow.

A local assistant may be provided as a launchpad for users to launch automations (e.g., UiPath Assistant^{™}). This functionality may be provided in a tray provided by an operating system, for example, and may allow users to interact with RPA robots and RPA robot-powered applications on their computing systems. An interface may list automations/workflows approved for a given user and allow the user to run them. These may include ready-to-go automations from an automation marketplace, an internal automation store in an automation hub, etc. When automations run, they may run as a local instance in parallel with other processes on the computing system so users can use the computing system while the automation performs its actions. In certain embodiments, the assistant is integrated with the task capture functionality such that users can document their soon-to-be-automated processes from the assistant launchpad.

In another exemplary engagement functionality, Chatbots (e.g., UiPath Chatbots^{™}), social messaging applications, an/or voice commands may enable users to run automations. This may simplify access to information, tools, and resources users need to interact with customers or perform other activities. For instance, a chatbot may respond to a command formulated in a natural language by triggering a robot configured to perform operations such as checking an order status, posting data to a customer relations management (CRM) platform, etc.

In some embodiments, some functionality of hyper-automation system 10 may be provided iteratively and/or recursively. Processes can be discovered, automations can be built, tested, and deployed, performance may be measured, use of the automations may readily be provided to users, feedback may be obtained, Al/ML models may be trained and retrained, and the process may repeat itself. This facilitates a more robust and effective suite of automations.

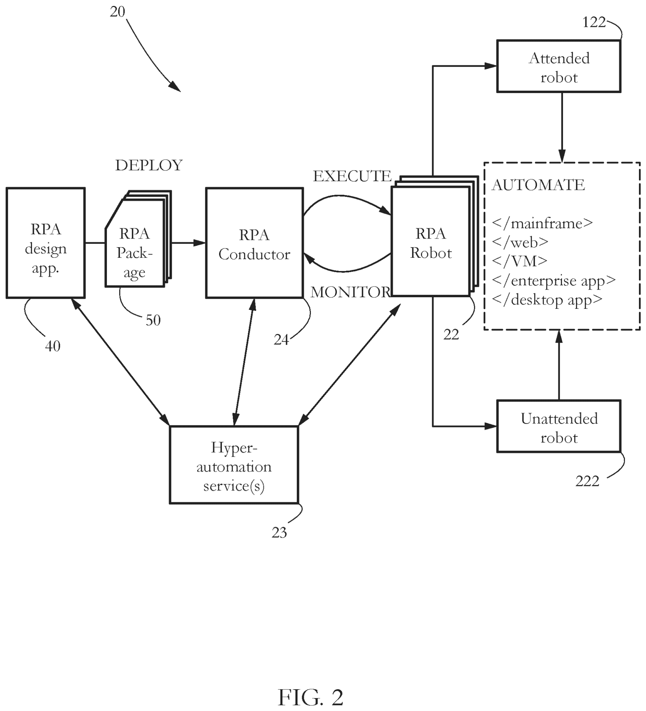

Fig. **2** illustrates exemplary components and operation of an RPA system **20** according to some embodiments of the present invention. RPA system **20** may form a part of hyper-automation system **10** of Fig. **1****.** RPA system **20** includes an RPA design application **40** that enables a developer to build automations, by designing and implementing RPA workflows. For instance, application **40** may expose a user interface and set of tools that give the developer control of the execution order and the relationship between activities of a workflow. One commercial example of RPA design application **40** is UiPath Studio^{™}.

Some types of RPA workflows may include, but are not limited to, sequences, flowcharts, finite state machines (FSMs), and/or global exception handlers. Sequences may be particularly suitable for linear processes, enabling flow from one activity to another without cluttering a workflow. Flowcharts may be particularly suitable to more complex business logic, enabling integration of decisions and connection of activities in a more diverse manner through multiple branching logic operators. FSMs may be particularly suitable for large workflows. FSMs may use a finite number of states in their execution, which are triggered by a condition (i.e., transition) or an activity. Global exception handlers may be particularly suitable for determining workflow behavior when encountering an execution error and for debugging processes.

Once a workflow is developed, it may be encoded in computer-readable form, such as an RPA script or an RPA package **50** (Fig. **2****).** An RPA script comprises a specification of the respective workflow, the specification comprehensible to (or interpretable by) RPA robot **22.** RPA scripts may be formulated according to any data specification format known in the art, for instance in a version of an extensible markup language (XML), Javascript Object Notation (JSON), or a programming language such as C#, Visual Basic, Java, etc. Alternatively, RPA scripts may be formulated in an RPA-specific version of bytecode, or even as a sequence of instructions formulated in a natural language such as English, Spanish, Japanese, etc. In some embodiments, one or more related RPA scripts are bundled together with other files and/or metadata, to form RPA package **50.** For instance, beside RPA scripts, RPA package **50** may comprise a specification of a resource required for executing the respective workflow(s). Exemplary resources include a location of a file (e.g., path, URL), a filename, and a set of credentials for accessing a particular machine, computer program, or service, among others. In what is commonly known in the art as a 'build', RPA scripts may be pre-compiled into a set of executable files which may include a main executable and accompanying libraries, resource specifications and metadata, to form RPA package **50.** Package **50** may use any data specification format known in the art. For instance, some embodiments of package **50** comprise a NuGet package of .NET assembly files.

In some embodiments, package **50** includes or is linked to and provided alongside with a set of full and/or partial user interface snapshots/screenshots, as described below. A full screenshot is a screenshot of the entire relevant automation interface, while a partial screenshot is a selective screenshot of one or more specific user interface elements (e.g. button, pulldown menu, fillable field) subject to automation. The relevant automation interface is an interface of the relevant application (e.g. browser, spreadsheet, word processing application) and/or remote desktop interface subject to automation in the current and/or subsequent automation workflow step. A user interface element subject to automation is an element on which a workflow step specifically acts, such as a button to be clicked or a field to be filled in the current and/or subsequent workflow steps. Full and/or partial snapshots may be generated using known methods, for example using image recognition functions that are used in existing RPA systems to recognize automation targets (interface elements), for example as described in US Patent Nos. 11,556,313, 11,270,186, 11,249,729 and 10,885,423. A snapshot/screenshot is generally an array of pixel values characterizing a corresponding screen region, possibly over multiple channels (e.g. RGB), and/or a set of values encoding such an array of pixel values (e.g. a JPEG/MPEG/wavelet frequency-domain encoding of a screen region). A snapshot/screenshot is distinct from a textual representation of the user interface that is used by the relevant application and/or operating system to render the display. Such a textual representation is commonly provided as a tree data structure such as a webpage Document Object Model (DOM) in the case of webpages. In some embodiments, a full and/or partial snapshot is provided for each workflow step and each UI element serving as an automation target, and package **50** includes a link between each snapshot and corresponding workflow step and/or automation target.

A skilled artisan will appreciate that RPA design application **40** may comprise multiple components/modules, which may execute on distinct physical machines. In one such example illustrating a cloud computing embodiment of the present invention, RPA design application **40** may execute in a client-server configuration, wherein one component of application **40** may expose an automation design interface on the developer's computer, and another component of application **40** executing on a remote server may assemble the workflow and formulate/output RPA package **50.** For instance, a developer may access the automation design interface via a web browser executing on the developer's computer, while the software processing the user input received at the developer's computer actually executes on the server.

In some embodiments, a workflow designed in RPA design application **40** is deployed to an RPA conductor **24,** for instance in the form of an RPA package as described above. Per the above, in some embodiments, conductor **24** may be part of hyper-automation core system **30** illustrated in Fig. 1. One commercial example of conductor **24** is UiPath Orchestrator^{™}.

Conductor **24** orchestrates one or more RPA robots **22** that execute the respective workflow. Such 'orchestration' may include creating, monitoring, and deploying computing resources for robots **22** in an environment such as a cloud computing system and/or a local computer. Orchestration may further comprise, among others, deployment, configuration, queueing, monitoring, logging of robots **22,** and/or providing interconnectivity for robots **22.** Provisioning may include creating and maintaining connections between robots **22** and conductor **24.** Deployment may include ensuring the correct delivery of software (e.g, RPA packages **50,** individual workflow specifications) to robots **22** for execution. Configuration may include maintenance and delivery of robot environments and workflow configurations. Queueing may include providing management of job queues and queue items. Monitoring may include keeping track of robot state and maintaining user permissions. Logging may include storing and indexing logs to a database and/or another storage mechanism (e.g., SQL, ElasticSearch^{®}, Redis^{®}). Conductor **24** may further act as a centralized point of communication for third-party solutions and/or applications.

RPA robots **22** are execution agents (e.g., computer programs) that implement automation workflows targeting various systems and applications including, but not limited to, mainframes, web applications, virtual machines, enterprise applications (e.g., those produced by SAP^{®}, SalesForce^{®}, Oracle^{®}, etc.), desktop and laptop applications, mobile device applications, wearable computer applications, etc. One commercial example of robot **22** is UiPath Robots^{™}.

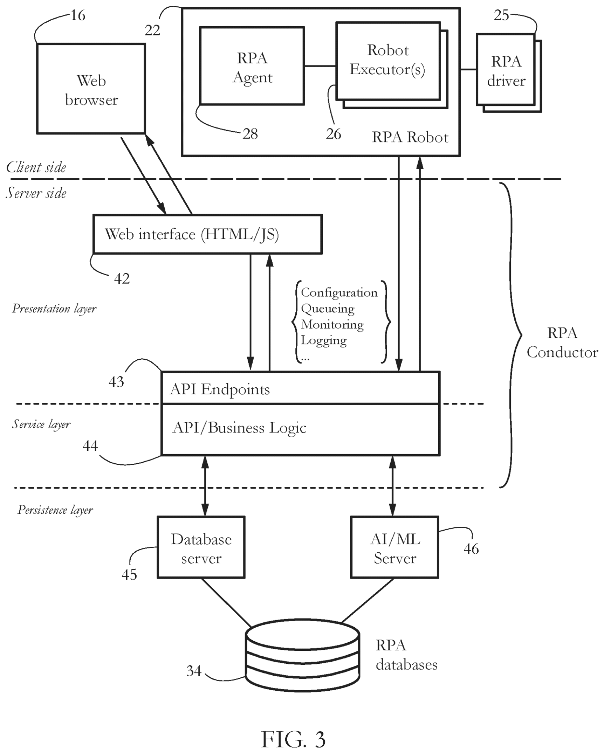

In some embodiments, to mimic a human user's interaction with a user interface of a target application, RPA robot **22** interfaces with a set of RPA drivers **25** (Fig. **3****)** executing on the respective host. Such drivers generically represent software modules that carry low-level operations such as moving a cursor on screen, registering and/or executing mouse, keyboard, and/or touchscreen events, detecting a current posture/orientation of a handheld device, detecting a current accelerometer reading, taking a photograph with a smartphone camera, etc. Some such drivers form a part of the local operating system. Other RPA drivers **25** may implement various application-specific aspects of a user's interaction with complex target applications such as SAP^{®}, Citrix^{®} virtualization software, Microsoft Excel^{®}, etc. One particular example comprises a browser driver, which may be embodied as a set of browser-compatible scripts (e.g. JavaScript^{®}). When injected into a web page currently displayed within the browser, such a browser driver may identify various elements of the respective web page (e.g., buttons, menus, form fields, etc.), and may invoke a specific functionality of a respective element (e.g., type into a form field, select a menu item, toggle a checkbox, etc.). Other exemplary RPA drivers **25** include the Microsoft^{®} WinAppDriver, XCTest drivers from Apple, Inc., and UI Automator drivers from Google, Inc.

Types of robots may include attended robots **122,** unattended robots **222,** development robots (similar to unattended robots, but used for development and testing purposes), and nonproduction robots (similar to attended robots, but used for development and testing purposes), among others. Some activities of attended robots **122** are triggered by user events and/or commands and operate alongside a human operator on the same computing system. In some embodiments, attended robots **122** can only be started from a robot tray or from a command prompt and thus cannot be entirely controlled by conductor **24** and cannot run under a locked screen, for example. Unattended robots may run unattended in remote virtual environments and may be responsible for remote execution, monitoring, scheduling, and providing support for work queues.

In some embodiments executing in a Windows^{®} environment, robot **22** installs a Microsoft Windows^{®} Service Control Manager (SCM)-managed service by default. As a result, such robots can open interactive Windows^{®} sessions under the local system account and have the processor privilege of a Windows^{®} service. For instance, a console application may be launched by a SCM-managed robot. In some embodiments, robot **22** may be installed at a user level of processor privilege (user mode, ring 3.) Such a robot has the same rights as the user under which the respective robot has been installed. For instance, such a robot may launch any application that the respective user can. On computing systems that support multiple interactive sessions running simultaneously (e.g., Windows^{®} Server 2012), multiple robots may be running at the same time, each in a separate Windows^{®} session, using different usernames.

In some embodiments, robots **22** are split into several components, each being dedicated to a particular automation task. The robot components in some embodiments include, but are not limited to, SCM-managed robot services, user-mode robot services, executors, agents, and command-line. Depending on platform details, SCM-managed and/or user-mode robot services manage and monitor Windows^{®} sessions and act as a proxy between conductor **24** and the host machines (i.e., the computing systems on which robots **22** execute). These services are trusted with and manage the credentials for robots **22.** The command line is a client of the service(s), a console application that can be used to launch jobs and display or otherwise process their output.

An exemplary set of robot executors **26** and an RPA agent **28** are illustrated in Fig. **3****.** Robot executors **26** may run given jobs under a Windows^{®} session. Executors **26** are configured to receive RPA package **50** specifying a workflow (e.g., sequence of robotic activities), and to execute the respective package which effectively amounts to carrying out the respective sequence of RPA activities. In some embodiments, package **50** comprises pre-compiled executable code. In other exemplary embodiments, robot executor(s) **26** comprise an interpreter (e.g., a just-in-time interpreter or compiler) configured to translate a received RPA script comprising a workflow specification (e.g., bytecode, XML, JSON etc.) into runtime code comprising processor instructions for carrying out the respective workflow. Executing RPA package **50** may thus comprise executor(s) **26** translating a workflow specification included in package **50** and instructing a processor of the respective host machine to load the resulting runtime code into memory and to launch the runtime code into execution.

RPA agent **28** may manage the operation of robot executor(s) **26.** For instance, RPA agent **28** may select tasks/scripts for execution by robot executor(s) **26** according to an input from a human operator and/or according to a schedule. Agent **28** may start and stop jobs and configure various operational parameters of executor(s) **22.** When robot **22** includes multiple executors **26,** agent **28** may coordinate their activities and/or inter-process communication. RPA agent **28** may further manage communication between RPA robot **22** and conductor **24** and/or other entities.

Exemplary RPA system **20** in Fig. **2** forms a part of hyper-automation system **10** (see Fig. **1****).** As such, robots **22** may interact with various components and use various aspects of hyper-automation core system **30,** illustrated generically as hyper-automation services **23** in Fig. **2****.** For instance, developers may use RPA design application **40** to build and test RPA robots **22** that utilize Al/ML models **36.** Such RPA robots **22** may send input for execution of the Al/ML model(s) and receive output therefrom via hyper-automation core system **30.** Robot **22** may be a listener, as described above. These listeners may provide information to core hyper-automation system **30** regarding what users are doing when they use their computing systems. This information may then be used by hyper-automation system **30** for process mining, task mining, task capture, etc. In another exemplary embodiment, hyper-automation services **23** may expose data labeling functionality to user of the computing system hosting robot **22** or to another computing system that robot **22** provides information to. For instance, if robot **22** calls a computer vision Al/ML model **36** but the respective model does not correctly identify a button on the screen, the user may explicitly provide a correct identification. Such information may be passed on to hyper-automation core system **30** and then used for re-training the respective Al/ML model.

In some embodiments, selected components of hyper-automation system **10** and/or RPA system **20** may execute in a client-server configuration. In one such configuration illustrated in Fig. **3****,** RPA robot **20** including executor(s) **26** and RPA agent **28** may execute on a client side, for instance on one of RPA client computers **12a-c** in Fig. **1****.** In turn, the functionality of conductor **24** and/or other services of hyper-automation core system **30** may be implemented on the server side, e.g., on remote RPA servers **32** (Fig. **1****).** It should be noted that the client side, the server side, or both, may include any desired number of computing systems (e.g., physical or virtual machines) without deviating from the scope of the invention. The illustrated RPA system may be cloud-based, on-premises, or a combination thereof, offering enterprise-level, user-level, or device-level automation solutions for automation of different work processes.

Robot **22** may run several jobs/workflows concurrently. RPA agent **28** (e.g., a Windows^{®} service) may act as a single client-side point of contact of multiple executors **26.** Agent **28** may further manage communication between robot **22** and conductor **24.** In some embodiments, communication is initiated by RPA agent **28,** which may open a WebSocket channel to conductor **24.** Agent **28** may subsequently use the channel to transmit notifications regarding the state of each executor **26** to conductor **24,** for instance as a heartbeat signal. In turn, conductor **24** may use the channel to transmit acknowledgements, job requests, and other data such as RPA packages **50** to robot **22.**

In one embodiment as illustrated in Fig. **3****,** conductor **24** includes a web interface **42** and a set of service modules comprising a set of Application Programming Interface (API) endpoints **43** and service APIs/business logic **44.** A user may interact with conductor **24** via web interface **42** (e.g., by opening a dedicated web page on a browser **16),** to instruct conductor **24** to carry out actions such as scheduling and/or starting jobs on robot **22,** creating robot groups/pools, assigning workflows to robots, adding/removing data to/from queues, analyzing logs per robot or workflow, etc. Interface **42** may be implemented using Hypertext Markup Language (HTML), JavaScript^{®} (JS), or any other data format known in the art.

Conductor **24** may carry out actions requested by the user by selectively calling service APIs/business logic **44** via endpoints **43.** In addition, some embodiments use API endpoints **43** to communicate between RPA robot **22** and conductor **24,** for tasks such as configuration, logging, deployment, monitoring, and queueing, among others. API endpoints **43** may be set up using any data format and/or communication protocol known in the art. For instance, API endpoints **43** may be Representational State Transfer (REST) and/or Open Data Protocol (OData) compliant.

Configuration endpoints may be used to define and configure application users, permissions, robots, assets, releases, etc. Logging endpoints may be used to log different information, such as errors, explicit messages sent by robot **22,** and other environment-specific information. Deployment endpoints may be used by robot **22** to query the version of RPA package **50** to be executed. Queueing endpoints may be responsible for queues and queue item management, such as adding data to a queue, obtaining a transaction from the queue, setting the status of a transaction, etc. Monitoring endpoints may monitor the execution of web interface **42** and/or RPA agent **28.**

Service **APIs 44** comprise computer programs accessed/called through configuration of an appropriate API access path, e.g., based on whether conductor **24** and an overall hyper-automation system have an on-premises deployment type or a cloud-based deployment type. Exemplary APIs **44** provide custom methods for querying stats about various entities registered with conductor **24.** Each logical resource may be an OData entity in some embodiments. In such an entity, components such as a robot, process, queue, etc., may have properties, relationships, and operations. APIs **44** may be consumed by web application **42** and/or RPA agent **28** by getting the appropriate API access information from conductor **24,** or by registering an external application to use the OAuth flow mechanism.

In some embodiments, a persistence layer of server-side operations implements a database service. A database server **45** may be configured to selectively store and/or retrieve data to/from RPA databases **34.** Database server **45** and database **34** may employ any data storage protocol and format known in the art, such as structured query language (SQL), ElasticSearch^{®}, and Redis^{®}, among others. Exemplary data stored/retrieved by server **45** may include configuration parameters of robots **22** and robot pools, as well as data characterizing workflows executed by robots **22,** data characterizing users, roles, schedules, queues, etc. In some embodiments, such information is managed via web interface **42.** Another exemplary category of data stored and/or retrieved by database server **45** includes data characterizing the current state of each executing robot, as well as messages logged by robots during execution. Such data may be transmitted by robots **22** via API endpoints **43** and centrally managed by conductor **24,** for instance via API logic **44.** Another exemplary category of data stored and/or retrieved by database server **45** includes form-filling strategy packages and/or strategy ranking records as described in detail below.

Server **45** and database **34** also store/manage process mining, task mining, and/or task capture-related data, for instance received from listener modules executing on the client side as described above. In one such example, listeners may record user actions performed on their local hosts (e.g., clicks, typed characters, locations, applications, active elements, times, etc.) and then convert these into a suitable format to be provided to and stored in database **34.**

In some embodiments, a dedicated AI/ML server **46** facilitates incorporation of AI/ML models **36** into automations. Pre-built AI/ML models, model templates, and various deployment options may make such functionality accessible even to operators who lack advanced or specialized Al/ML knowledge. Deployed robots **22** may call Al/ML models **36** by interfacing with Al/ML server **46.** Performance of the deployed Al/ML models **36** may be monitored and the respective models may be re-trained and improved using human-validated data. AI/ML server **46** may schedule and execute training jobs and manage training corpora. Al/ML server **46** may further manage data pertaining to Al/ML models **36,** document understanding technologies and frameworks, algorithms and software packages for various Al/ML capabilities including, but not limited to, intent analysis, natural language processing (NLP), speech analysis and synthesis, computer vision, etc.

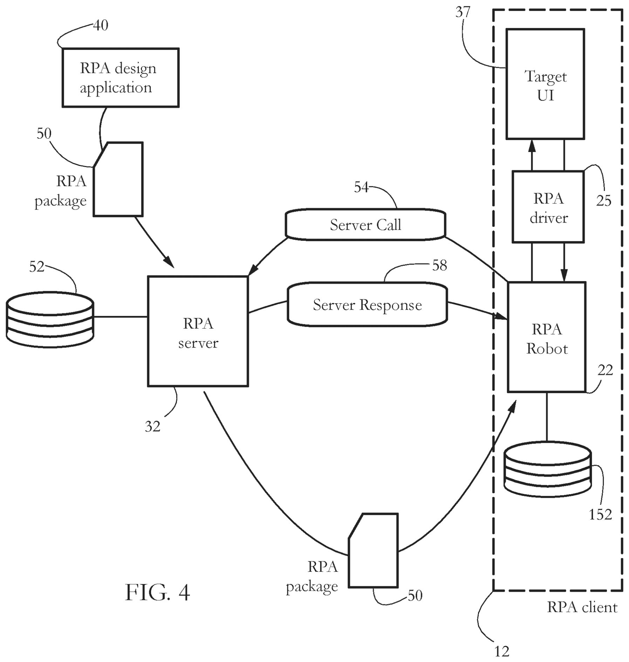

Fig. **4** shows an exemplary RPA system according to some embodiments of the present invention. In an exemplary embodiment illustrating an airport check-in scenario, an RPA robot **22** may be configured to receive a scan of a passenger's passport and automatically extract structured data from it, such as a name, nationality, and passport number. The RPA robot may then automatically enter passenger data into a web-based airport check-in form. To carry out the form-filling activities, robot **22** may identify each field of the respective form and fill in the appropriate information. In another exemplary embodiment illustrating a payroll operation, an RPA robot **22** may be configured to run payroll on a remote website for a set of employees using data retrieved from a local spreadsheet. Various pages of the remote website are loaded sequentially, and data is entered in form fields identified on each page.

In some embodiments, an RPA robot **22** may operate on a thin client or other local machine running remote display virtualization. In such an approach, UI images are rendered remotely on a server and streamed to a local client using a protocol such as Remote Desktop Protocol (RDP), PC-over-IP (PCoIP), or High Definition Experience (HDX). Such protocols are known and are commonly employed by solutions from virtualization vendors such as Microsoft, VMWare and Citrix. The latency of systems employing remote display virtualization may be higher and less predictable than that of systems with locally-rendered user interface.

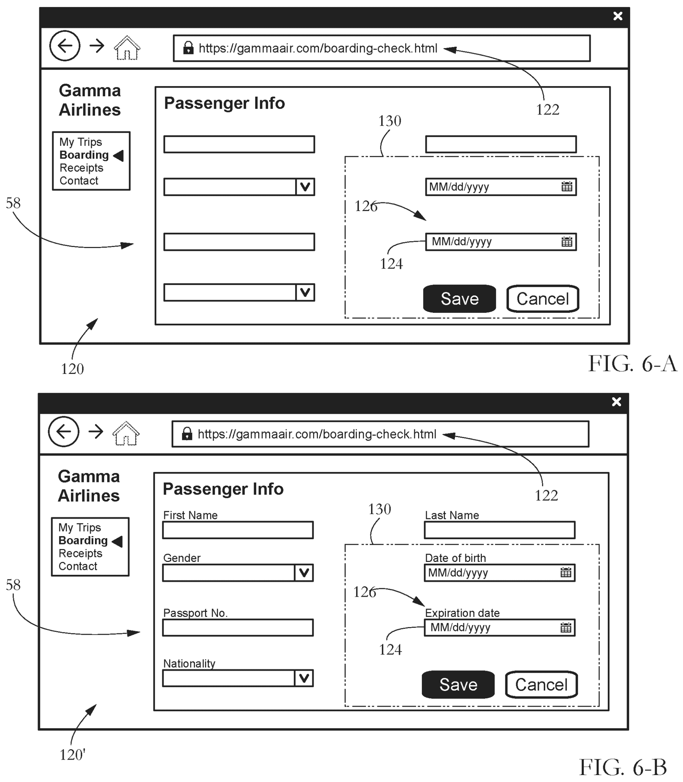

An RPA robot **22** may execute on an RPA client **12,** for instance a desktop computer or thin client, and/or on a remote server computer. To execute various activities, robot **22** interacts with a target user interface (UI) **37** exposed by an RPA target application, such as a web browser in one example. An exemplary target UI **37** as described herein is illustrated in Fig. **6-A-B** and comprises multiple user interface elements/fields **58.** A skilled artisan will know that the look and content of the illustrated form is not meant to be limiting, and that similar forms may be displayed by other RPA target applications such as CRM and ERP platform clients, spreadsheet applications, and document viewer applications (e.g., Adobe^{®} Reader^{®}), among others.

Depending on the target application and target UI **37,** input fields **58** may vary considerably in type and behavior, and the operation of some fields may be dependent on the availability and/or content of other fields. The HTML specification alone defines more than 20 distinct input types, including text, radio, checkbox, date, and password, among others. Some such field types have type-specific behaviors, and may be linked to or initiate the appearance of other fields. For instance, clicking/tapping on a date field such as exemplary field **124** in Fig. **6-A-B** may display a calendar widget and expect a user input selecting a date via the calendar. Other field types allow the user to select input data from a dropdown list of options. Interface designers may further turn on various optional features such as autocomplete and/or add input validation procedures restricting the format and/or content of the input data (e.g., to ensure that numbers stay between predetermined bounds, that dates are written in a pre-determined format, that the respective text does not include certain special characters, etc.). The behavior of input fields exposed by some enterprise application Uls may be even more complex. For instance, selecting an option from a dropdown menu may cause the display of a pop-up window that further exposes another set of input fields, etc.

As illustrated in Fig. **4****,** RPA design application **40** transmits an RPA package **50** including an RPA workflow and associated full and/or partial interface snapshots (screenshots) to RPA server **32,** which distributes RPA package **50** to RPA robot **22** for execution at runtime. A local cache **152** is used to store locally data for future reuse, including full and/or partial interface snapshots. RPA robot **22** interacts with target UI **37** through a set of RPA drivers **25** provided as part of an RPA application installed on RPA client **12.** As detailed below, RPA robot **22** makes a sequence of server calls **54** requesting services from RPA server **32,** and receives a corresponding sequence of server responses **58** in response.

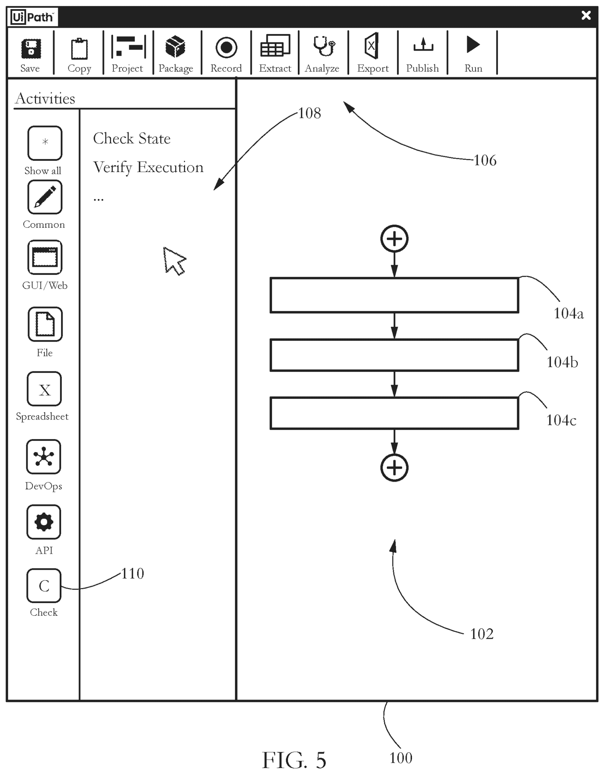

Fig. **5** illustrates an exemplary design-time user interface **100** exposed by RPA design application **40** according to some embodiments of the present invention. Interface **100** may be configured to enable a user to build automations by using a set of intuitive visual and/or drag-and-drop tools and/or prompt-based interactions with one or more LLM-based automation agents, rather than by typing automation code. For instance, as illustrated, interface **100** enables the user to assemble a desired workflow **102** from a set of individual building blocks arranged in sequence **104a-c.** Such building blocks may comprise individual RPA activities, such as opening an instance of an application (e.g., web browser), clicking on a UI element (e.g., button), filling out a form field, etc. The granularity of such individual building blocks may vary and may be controlled by the user. For instance, some RPA activities may themselves consist of subsequences of other RPA activities. As such, interface **100** may enable the user to group several activities into a new building block/RPA activity.

In some embodiments, RPA design interface **100** (Fig. **5****)** comprises an area for displaying a diagram of an RPA workflow currently under construction. The workflow diagram may comprise a visual representation of a set of already selected robot activities arranged in sequence according to a desired order of execution of the respective activities. In the example of Fig. **5****,** individual activities are represented by activity containers **104a-c** connected by arrows in the manner of a computer flowchart. In some embodiments, the user may access each individual activity by clicking inside the respective activity container **104a-c.** In response to detecting such a click, some embodiments may expose an activity configuration interface enabling the user to configure various aspects of the respective activity, as further detailed below. Configuration options may include an activity type (e.g., selectable from activity menu **56),** name, and various activity-specific parameters. In some embodiments, interface **52** may further enable the user to insert, delete, and change the order of containers, for instance using drag-and-drop manipulations. A user may further group multiple selected activities/containers together, to form a composite activity represented by its own container with a name, visual style, and configuration options. Such a container may for instance be represented as a box drawn around the selected member activities/containers.

In the example illustrated in Fig. **5****,** design interface **100** comprises a main menu/ribbon **106** including a plurality of menu items for managing RPA projects. Ribbon **106** may comprise, for instance, individual controls for opening, saving, exporting, and executing the current workflow, and recording a set of actions to be performed by robot **22,** among others.

Design interface **100** may further expose an activity menu **108** listing a plurality of available activities for building RPA workflows. In some embodiments, activity menu **56** may enable the user to access/use a broad variety of robotic activities, including GUI activities, browser activities, mail activities, spreadsheet activities, file activities, API activities, DevOps activities, activities for interacting with various software platforms and services such as SAP^{™}, and Al/ML activities, among others. Exemplary GUI activities may comprise activities for interacting with a GUI, such as identifying various GUI elements (text, images, and controls), clicking a button, executing a screen gesture (pinching, swiping, etc.), filling in a form field, and scraping/copying data from a GUI, among others. Exemplary browser activities may include opening a browser window and navigating to a selected URL. Mail activities may include activities for sending and receiving electronic communications (e.g., email, instant messaging, etc.). Spreadsheet activities may include selecting spreadsheet cells according to various criteria, copying a content of a selected cell, and entering data into a selected cell, among others. File activities may include, for instance, accessing various local or network addresses, downloading, uploading, opening, editing, and deleting files. DevOps activities may include activities for testing and/or managing workflows. API activities may include calling various pre-defined external APIs. Exemplary Al/ML activities may include computer vision-related activities such as text and/or image recognition, among others.

For convenience, activity menu **108** may be organized into a hierarchy of submenus. In the example of Fig. **5****,** available activities are organized into submenus according to various criteria, such as a type of target application (e.g., activities for interacting with GUIs are grouped together into a submenu, while activities for interacting with a spreadsheet are grouped into another submenu). Other exemplary grouping criteria may include a type of target object: file-related activities may be grouped together into a submenu, while image-related activities may be grouped into another submenu. A skilled artisan will understand that such groupings are given only as examples and are not meant to be limiting.

In some embodiments, each activity includes one or more timing properties, including timeout and delay values, that may have default values and may be user-configurable. In some embodiments, a timeout value (e.g. 10s, 30s, 1 minute) assigned to a given activity defines a maximum amount of time in which the activity must be executed and/or commenced. A maximum amount of time in which the activity must be commenced may be equal to a maximum amount of time in which the user interface on which the activity acts is ready for execution of the activity (e.g. the respective user interface is fully loaded). One or more timeout values may also be set by default for actions that form part of an RPA activity, such as timeout values for fully loading a user interface and for identifying the RPA target element using a selector search. In some embodiments, a delay value (e.g. 200ms, 500ms, 2s) assigned to an activity or sub-activity action is a fixed amount of time inserted before and/or after commencement and/or completion of the activity/action. Such default timeout and delay values may be user-configurable as activity properties, for example in response to a user's right clicking on an activity to expose a property configuration menu/interface.

In some embodiments, activity menu **108** includes a check/verification area (e.g. submenu, tab) **110,** configured to expose verification activities including Check State and Verify Execution activities, described below. In some embodiments Check State and Verify Execution may also be set as properties (sub-actions) of other activities, rather than as stand-alone activities.

By using tools and activity menu(s) **108** exposed by interface **100,** a developer may effectively construct a pipeline workflow containing user-inserted or automatic verification properties and/or activities including verification actions, and further export the respective workflow as RPA package **50** (Fig. **4****).** By exposing a broad variety of RPA activities via menu(s) **108,** some embodiments enable the developer to implement verification actions and/or mix verification activities with other kinds of RPA activities, which substantially expands the resilience of the RPA workflow in environments having unstable and/or variable connectivity, such as remote desktop environments and/or remote computing (cloud) environments subject to poor and/or variable network connectivity.

Fig. **6-A** shows an exemplary screenshot of a partially-loaded user interface **120** while Fig. **6-B** shows an exemplary screenshot of a completely-loaded user interface **120'** resulting after partially-loaded user interface **120** has completed loading, according to some embodiments of the present invention. User interface **120** is illustrated as a mobile airline check-in webpage identified by a URL **122,** though it is understood that generally user interfaces may take many other forms, as described above. User interface **120** includes multiple fields **58,** including an exemplary user-input expiration date field **124** and associated descriptor field **126** including description text ("Expiration Date"). As illustrated, the content of descriptor field **126** characterizing an associated user-fillable expiration date field **124** is not loaded in the partially loaded state of Fig. **6-A****,** and is loaded in the fully-loaded state of Fig. **6-B****.** An exemplary partial screenshot **130** includes fields **124, 126,** and visual analysis of partial screenshot **130** allows determining the loading state of fields **124, 126** during or before an RPA activity that comprises filling-in field **124.**

In some embodiments, a group of user interface elements deemed to likely define a loaded state is presented graphically to the user (e.g. highlighted in a different color on screen) for confirmation and/or editing along a user interface such as the one shown in Fig. **6-B****.** The user can review the suggested elements, confirm the suggested group and/or add and remove elements from the group via graphical action (e.g. selection, drag and drop). A final group of user interface elements deemed to likely define a loaded state is then identified in response to the user confirmation, and identifiers of the relevant elements are included in the RPA specification as properties of the corresponding actvity.

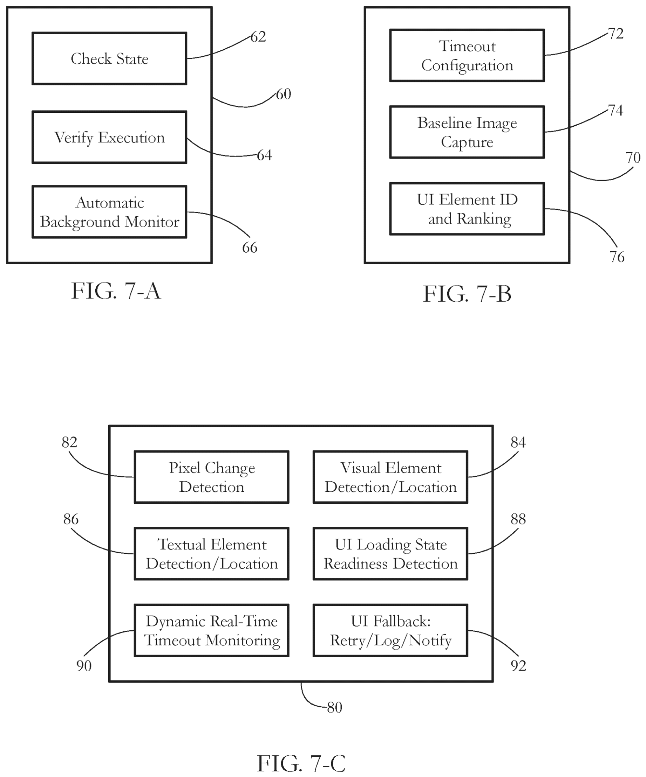

In some embodiments, RPA robot **22** includes a user interface loading state monitor, illustrated with reference to Figs. **7-A-C.** In particular, Fig. **7-A** shows an exemplary user interface loading state monitor, Fig. **7-B** shows design-time functions employed by such a monitor, and Fig. **7-C** shows exemplary runtime functions forming part of and/or employed by such a monitor.

Fig. **7-A** shows an exemplary user interface loading state monitor **60** forming part of or executing alongside robot **22.** As shown, user interface loading state monitor **60** includes two user-configurable, specification-based Check State and Verify Execution monitors **62, 64,** and an automatic background monitor **66.** Specification-based monitors **62-64** implement Check State and Verify Execution RPA actions/processes inserted by a user at design time as separate RPA activities and/or as properties (substeps) of existing RPA activities defining an RPA workflow, as described above with reference to Fig. **5****.** Automatic background monitor **66** implements a light/partial loading state monitoring process that is executed automatically for every RPA activity, without user input/intervention at design time.

In some embodiments, a Check State process performed by Check State monitor **62** determines whether an application's user interface is sufficiently (e.g. fully) loaded by visually and textually monitoring the presence, positioning, and appearance of multiple UI elements. Check State uses pixel change detection, computer vision, and element relevance ranking as described below to dynamically assess the readiness of the application UI before proceeding with further automation actions such as a selector search for a designated UI automation target. The element relevant ranking may be provided by a large language model (LLM) configured to rank user interface elements by relevance according to weights generated from training data including a user interface fields (elements) from a wide array of user interfaces.

In some embodiments, Check State is an RPA activity inserted by a user into the relevant workflow as illustrated in Fig. **5****.** The Check State activity includes identifiers of one or more user interface elements selected by a user at design time to indicate a sufficiently (e.g. fully) loaded state of the user interface characterizing the immediately-subsequent RPA activity of the RPA workflow under construction. For example, if the immediately-subsequent RPA activity enters an expiration date into field **124** (Figs. **6-A-B),** then the Check State activity may identify fields **124, 126** and optionally other fields for determining whether the user interface has sufficiently loaded.

In some embodiments, Check State receives as inputs a list of UI elements defining a sufficiently loaded state, an LLM-generated contextual importance/relevance ranking of the UI elements defining the loaded state, a set of initial timeout values and parameters governing/constraining the dynamic adjustment of the timeout values, and a sensitivity level (threshold) for detecting significant screen changes via pixel change detection. The list of UI elements and associated ranking may specifically identify the user interface element that is the target of the automation activity immediately following Check State. Check State then generates a set of ultimate outputs including a user interface state readiness value, which may be a Boolean (binary, yes/no) value indicating whether the application/user interface is ready/loaded, a set of user interface elements and their detected positions (if any) and readiness status (loaded/detected or not), and an error log detailing performed steps and timing values if readiness is not achieved within the relevant, potentially dynamically adjusted, timeout. Check State also generates a set of intermediate outputs such as dynamic timeout adjustment values, described below.

Fig. **7-B** shows a monitoring setup agent, which collects data at design time for use in runtime monitoring of a user interface loading state, including a set of design-time functions/processes employed by the Check State and/or Verify Execution activities. A timeout configuration function **72** generates a set of (one or more) timeout values for the Check State and/or Verify Execution activities. The timeout values may be predetermined (fixed) application-independent values, and/or values dependent on the context of RPA target application and its environment (e.g. website, native locally-running application, application running on remote desktop, etc.). A baseline image capture function **74** captures one or more full and/or partial screenshots defining a sufficiently (e.g. fully) loaded state of the target user interface. A user element identification and ranking function **76,** implemented using a large language model (LLM), identifies user interface elements (fields) in an initial baseline image, and ranks the elements by relevance. For example, the UI field that is the target of the immediately-subsequent RPA activity, if known, may be ranked most relevant, and may be provided as part of a group of elements deemed likely to sufficiently define the application's fully loaded state. Such elements may include interactive and descriptive user interface fields such as buttons, text fields, labels, icons, pulldown menus, and other components deemed relevant to the application's operation, and in particular the execution of the immediately-subsequent RPA activity.

As a user begins building an automation workflow in an RPA design application (e.g. UiPath Studio), as illustrated in Fig. **5****,** the group of user interface elements deemed to likely define a loaded state is presented graphically to the user (e.g. highlighted in a different color on screen) for confirmation and/or editing. The user can review the suggested elements, confirm the suggested group and/or add and remove elements from the group via graphical action (e.g. selection, drag and drop). In response to the user confirming/finalizing the element group denoting a loaded state, baseline image capture function **74** captures the screenshot(s) characterizing a loaded state. In some embodiments, the baseline screenshot(s) serves as a reference(s) for subsequent visual comparisons performed during runtime to determine whether the user interface has fully loaded.

Fig. **7-C** shows a set of runtime functions/processes employed by the Check State and/or Verify Execution activities. A pixel change detection function **82** operates on current user interface screenshots taken at predetermined intervals (e.g. every .1 or .2 seconds), to determine whether subsequent visual and textual analysis steps are warranted. In some embodiments, the fraction of changed pixels and the velocity and acceleration of pixel changes relative to the immediately-previous screenshot (if any) are determined at each step/interval. Further visual and textual analysis is then initiated when a predetermined fraction of pixels in the current screenshot has changed from the immediately-preceding screenshot.

A visual element detection and location function **84,** executing on a remote (cloud) server, performs a visual (computer vision, or CV) analysis of the current user interface screenshot, and returns the presence and positioning of the UI elements identified at design time as defining a sufficiently loaded state. CV analysis of screenshots to identify UI elements is known in RPA, and is also employed in searches for RPA targets. The UI elements determined to be present/loaded are subsequently ranked by relevance according to the relevance information generated at design time.

A textual element detection and location function **86,** running locally, may be used to perform a textual analysis on one or more data structures used to render the user interface locally, if available. For a website, such a data structure may include a document object model (DOM), a tree structure defining the various components of the website and their hierarchy. For native applications, such a data structure may include application and/or driver components used to render the application user interface. Textual analysis may be relatively efficient in comparison to CV analysis, but may not be always feasible. For example, the data structures used to render the user interface may not be available locally in environments such as remote desktop environments.

A UI loading state readiness detection function **88** determines a readiness score and/or related data characterizing UI loading reading state readiness, such as loading velocity and/or acceleration. An overall readiness/loading score is generated according to the UI elements detected to be present and their relevance in a given snapshot. For example, a readiness score may be chosen to be the sum of relevance values for detected/loaded UI elements. In some embodiments, the readiness score may be determined according to a count of UI elements determined to have loaded, and according to a count of UI elements characterizing a fully loaded state. For example, if 6 out of 60 elements have loaded, the readiness score may be set to .1 (or 10%), or a weighted score determined by weighting individual elements by relevance value, i.e. as a sum of loaded relevance values divided by total relevance values.

A dynamic real-time timeout monitoring function **90** checks whether one or more applicable timeout intervals have expired. Timeout and delay values are generally used to address latency, timing variance, and other problems encountered in certain RPA environments, such as environments subject to variable or constrained network and/or processing availability. Delay values are commonly relatively short, e.g. on the order of tenths of a second to seconds, and add fixed minimum times that are commonly needed before a given step (e.g. selector search) can proceed without error. Timeout values are commonly relatively long, e.g. on the order of seconds to tens of seconds, and generally define maximum times within which certain tasks must be executed/completed, possibly after repeated attempts, before triggering an error/exception. Timing out is an undesirable outcome since it generally leads to termination of the execution of the RPA workflow. At the same time, timing out may be necessary when execution has encountered a fatal problem. Timeout values that are too short may lead to premature termination of RPA workflow execution, while values that are too long may lead to inefficiencies. An activity may have one or more associated timeout values, for example one timeout value for completion of the entire activity, and other timeout values for completion of segments/parts of an activity, such as user interface loading and a selector search for the RPA target.

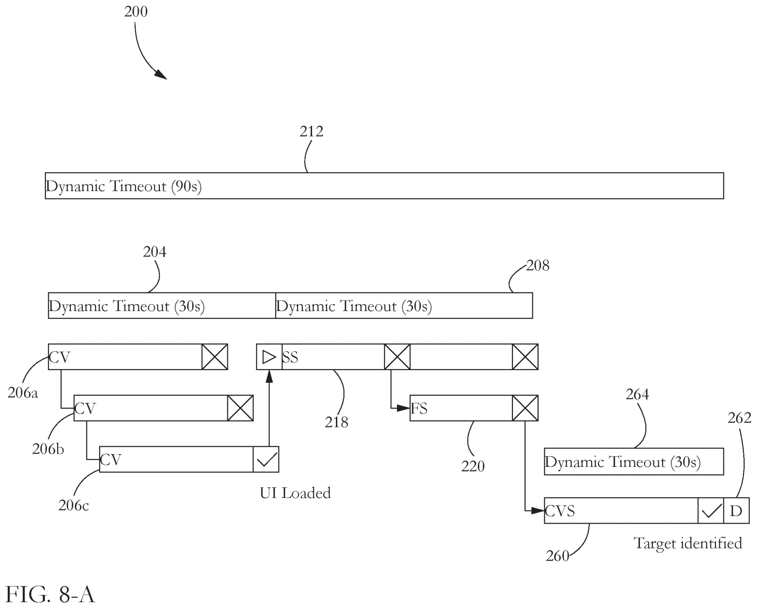

Fig. **8-A** shows a runtime timing diagram illustrating an exemplary RPA activity execution sequence **200** including timeout values according to some embodiments of the present invention. In Fig. **8-A** time progresses from left to right. Execution may start with a delay period of e.g..1 or .2 seconds (not illustrated), after which the user interface starts loading. A timeout applicable to the user interface loading process is shown at **204,** a timeout applicable to a textual selector search process (search for RPA target UI element) is shown at **208,** a timeout applicable to a visual selector search process is shown at **262,** and a timeout applicable to the entire activity is shown at **212.** A textual selector search process **218** is followed by a a visual (CVS) selector search process **260,** which in turn is followed by a delay **262.**

After a sufficient pixel change has been detected, a first CV (visual) analysis **206a** commences, and eventually determines that the user interface has not sufficiently loaded. Subsequent pixel change detections initiate corresponding subsequent CV analysis steps **206b-c.** Execution of subsequent visual analysis steps **206b-c** may overlap with execution of the first visual analysis **206a.** In the illustrated example, the second visual analysis **206b** also indicates that the user interface has not loaded sufficiently (e.g. fully), while the third visual analysis **206c** indicates that the user interface has loaded fully. At that point monitoring for the expiration of timeout period **204** ends, since the applicable action has completed successfully within the maximum allowable time (e.g. 30 s).

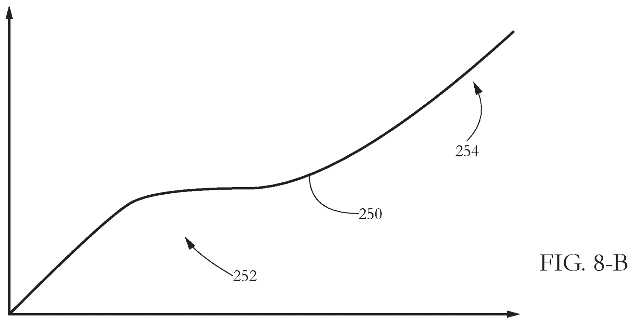

Fig. **8-B** shows an exemplary measured evolution of a loading fraction of a user interface over time as determined via repeated CV analysis (vertical axis) as a function of time (horizontal axis). The illustrated continuous curve **250** represents a number of discrete measurement points, and may be thought of as curve-fitted function passing through the measurement points. The detected progression may be quantified as a relevance-weighted sum of detected UI elements (e.g. the sum of the relevancies of the UI elements of interest detected to have loaded). A detected progression may also be quantified according to a pixelwise difference between the current UI screenshot and the baseline screenshot of the fully loaded UI. In the example illustrated, the user interface loading initially progresses but then stalls, as shown at **252,** and then restarts and completes (shown at **254).**

Determining that the UI has successfully loaded initiates a selector search process. The selector search process includes a strict selector search **218,** a fuzzy selector search **220,** and a visual selector search **260.** Strict selector search **218** and fuzzy selector search **220** are textual searches operating on text-based data structure(s) used to render the relevant UI, while visual selector search **260** operates on UI images/screenshots. Text-based and image-based selector searches for RPA targets are known. For further information on such approaches to RPA target identification see for example US Patent Nos. 11,249,729, 11,556,313, and 11,270,186. For information on fuzzy selector searches see for example US Patent No. 11,054,960. A strict selector search looks for a user interface element that matches precisely a set of characteristics identified at design time, while a fuzzy selector search looks for a user interface element that matches partially (but sufficiently to allow identification) the design-time characteristics specified for the element. A fuzzy selector may be useful for example if a user interface has undergone minor changes between design time and run time, as happens sometimes for websites and other user interfaces that change occasionally. As illustrated, the RPA target search process starts with strict selector search **218.** If the initial strict selector search is not successful, fuzzy selector search **220** is initiated and the strict selector search is repeated. Realistic implementations may include a higher number of strict and fuzzy selector search attempts than illustrated in Fig. **8-A** within a timeout period of 30 s. If/when the textual search processes time out (see **208),** visual search **260** is initiated, subject to timeout **264.**

A UI fallback function **92** (fig. **7-C****)** is called whenever a timeout or other exception occurs. Fallback actions include proceeding to another action (as illustrated in Fig. **8-A** by the initiating of a visual selector search when textual selector search attempts fail), retrying the action that triggered the timeout/exception if appropriate, logging the error and associated parameter values, and/or notifying the user of the exception and associated parameter values and available options. The appropriate fallback actions may be set by default and/or defined by the user at design time, and may be incorporated into the RPA specification as properties of the corresponding activity (e.g. Check State or Verify Execution).

In some embodiments, a Verify Execution activity performed by Verify Execution monitor **64** (Fig. **7-A****)** verifies that a user interface element expected to be present after completion of an activity is in fact present as expected. Verify Execution operates generally as described above with reference to Check State, except that it determines the availability of the result of an activity, rather than its object. Consider for example an activity that clicks on a "Submit" button, and which is expected to result in the appearance of a pop-up selection menu. A Check State activity verifies that the "Submit" button is available for clicking, *inter alia* by determining that the user interface containing the 'Submit" button and the rest of the user interface needed for clicking it have loaded. A Verify Execution verifies that the resulting pop-up selection menu is available for the next activity, *inter alia by* determining that the user interface containing the pop-up selection menu and the rest of the user interface needed for performing a selection from the menu have loaded. The Verify Execution activity includes one or more identifiers of the relevant user interface element (pop-up selection menu in this example), generated from a user selection of the user interface element at design time via the design-time application interface (see Figs. **6-A-B).**

In some embodiments, a light/partial loading-state monitoring process executed by automatic background monitor **66** (Fig. **7-B****)** performs a light/partial user interface readiness check for every RPA activity automatically, without user intervention or the presence of an explicit RPA activity such as Check State or Verify Execution in the workflow constructed by a user at design time. This automated and hidden check-up process/mechanism may share some of the steps features of the more complete and computationally-intensive verification process described above.

In some embodiments, the light monitoring process employs a textual analysis performed by textual element detection and location function **86,** described above with reference to Fig. **7-C****.** In some embodiments, the light monitoring process employs a visual analysis as described above, with parameters/settings reducing the frequency and/or computational load of the visual analysis process relative to the user-initiated Check State/Verify Execution activities. For example, the sensitivity setting/threshold for pixel change detection may be set to initiate CV calls relatively frequently. In some embodiments, the pixel change sensitivity setting/threshold may be user-customizable via a user interface input field allowing a user to change the parameter as an activity property, and/or via a configuration file.

In some embodiments, differences between the light and full monitoring processes may be summarized as follows:

**Table 1**

| Feature | Full Monitoring | Light Monitoring |
|---|---|---|
| Monitoring Mechanism | Visual | Textual and/or visual |
| User | User-inserted distinct activity; user- | Operates by default, no user |
| configuration | controlled element selection (target, elements defining loaded state); various parameters are customizable | setup/activity insertion required; some parameters (e.g. pixel change detection threshold) may be customizable as properties of subject activity |
| Visibility | Displayed and configurable in RPA workflow interface | Operates silently in the background; partially customizable as part of subject activity |
| Flexibility | High flexibility, with user control over various parameters including element selection, threshold(s), timeout adjustments | Automatic adjustments based on predefined internal settings, limited user control over customization |
| Error handling | User-defined fallback mechanisms (retries, alerts) | Automatic, predefined error handling |
| Use case(s) | Workflows that are complex and/or operate in difficult environments, e.g. characterized by high and unpredictable latency, such as remote desktop environments, where specific and customized state checks are valuable and worth the computational cost | Standard workflows where ease of setup/use is prioritized and errors and/or timeouts are less frequent |

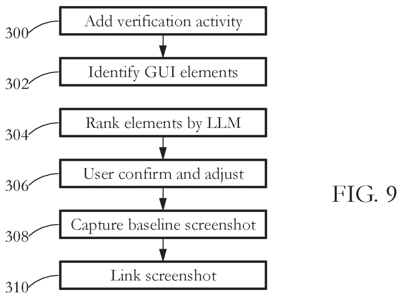

Fig. **9** shows an exemplary sequence of steps performed by an RPA design application at design-time, according to some embodiments of the present invention. In a step **300,** in response to user input received in a workflow-building interface (Fig. **5****),** a verification activity such as Check State or Verify Execution is added to the workflow under construction. In a step **302,** one or more GUI elements/fields characterizing a loading state of the relevant GUI are identified. The elements are identified by taking an initial baseline snapshot and recognizing all identifiable UI elements/fields in the snapshot using CV image recognition. CV image recognition functionality is also used in RPA to identify RPA targets. In a step **304,** the identified UI elements/fields are ranked by relevance, using for example an LLM and contextual information regarding the UI. In a step **306,** the group of interface elements defining a loaded state are changed, reordered and/or confirmed in response to user input as described above. In a step **308,** a baseline screenshot characterizing a loaded state is captured. In a step **310,** the captured baseline screenshot is linked to the corresponding verification activity (e.g. Check State or Verify Execution), and included in the corresponding workflow specification.

In some embodiments, for generic (non-verification) activities subject to light monitoring, some of the steps described above, in particular steps involving user input such as steps **300** and **306,** are skipped and the design-time process includes only steps **302, 304, 308,** and **310,** performed automatically.

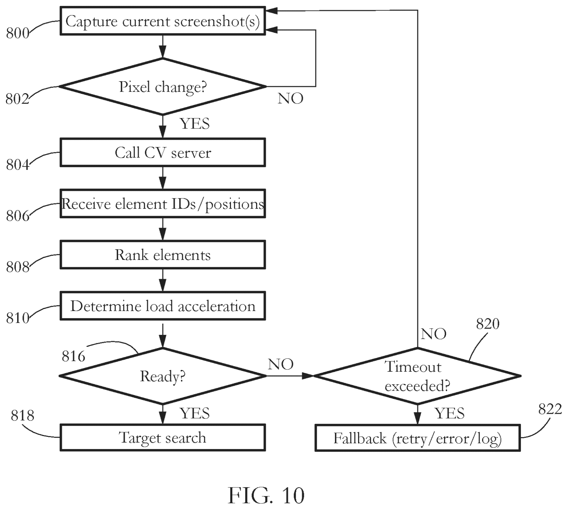

Fig. **10** shows an exemplary sequence of steps performed by an RPA robot at runtime according to some embodiments of the present invention. In a step **800,** one or more full and/or partial screenshots are captured. In some embodiments, step **800** is performed at predetermined intervals (e.g. every .1 or .2 seconds), regardless of how long subsequent steps illustrated in Fig. **10** might take. In other words, a new flow as illustrated in Fig. **10** may be initiated at predetermined intervals even if a previous flow has not finished, so that multiple flows may execute in a staggered manner, as illustrated in Fig. **8-A****.** In a step **802,** it is determined whether a sufficiently large pixel change has occurred relative to the immediately-preceding screenshot(s). If no, the process proceeds to step **800.** If yes, the process proceeds to a step **804.**

In step **804,** a call is made to a remote CV server to request analysis of the current screenshot. In a step **806,** the CV server returns the presence and positioning of any detected UI elements identified at design time as defining a sufficiently loaded state. In a step **808,** the elements found to be present are ranked by relevance according to relevance values determined at design time. In a step **810,** the acceleration of the present loading state is determined. In a simple approach, the acceleration may be defined as the difference in loading score velocity (difference in loading score over time) over time, as defined by the latest three loading scores and corresponding two loading score velocities.

In a step **816,** a determination is made whether the UI has loaded sufficiently for the next step(s), including an RPA target search, to proceed. If yes, the process proceeds to a step **818,** initiating and performing an RPA target search as described above. If no, the process proceeds to a step **820,** which determines whether a timeout for the UI loading process has been exceeded. If no, the process continues at step **800.** If yes, the process continues to a step **822,** which performs one or more fallback actions such as retry, error reporting, and/or logging as described above.

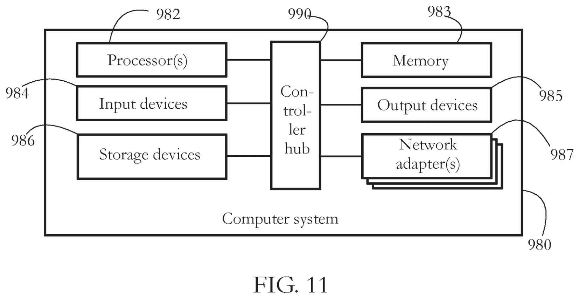

Fig. **11** shows an exemplary hardware configuration of a computer system **980** programmed to execute some of the methods described herein. Computer system **980** may represent any of RPA clients **12a-c** in Fig. 1, RPA client **12** in Fig. **4****,** as well as RPA server(s) **32.** The illustrated appliance is a personal computer; other computer systems such as servers, mobile telephones, tablet computers, and wearable computing devices may have slightly different configurations. Processor(s) **982** comprise a physical device (e.g. microprocessor, multi-core integrated circuit formed on a semiconductor substrate) configured to execute computational and/or logical operations with a set of signals and/or data. Such signals or data may be encoded and delivered to processor(s) **982** in the form of processor instructions, e.g., machine code. Processor(s) **982** may include a central processing unit (CPU) and/or an array of graphics processing units (GPU).

Memory unit **983** may comprise volatile computer-readable media (e.g. dynamic random-access memory - DRAM) storing data and/or instruction encodings accessed or generated by processor(s) **982** in the course of carrying out operations. Input devices **984** may include computer keyboards, mice, trackpads, and microphones, among others, including the respective hardware interfaces and/or adapters allowing a user to introduce data and/or instructions into computer system **980.** Output devices **985** may include display devices such as monitors and speakers among others, as well as hardware interfaces/adapters such as graphic cards, enabling the respective computing device to communicate data to a user. In some embodiments, input and output devices **984-985** share a common piece of hardware (e.g., a touch screen). Storage devices **986** include computer-readable media enabling the non-volatile storage, reading, and writing of software instructions and/or data. Exemplary storage devices include magnetic and optical disks and flash memory devices, as well as removable media such as CD and/or DVD disks and drives. Network adapter(s) **987** include mechanical, electrical, and signaling circuitry for communicating data over physical links coupled to an electronic communication network (e.g., Fig. 1) and/or to other devices/computer systems. Adapter(s) **987** may be configured to transmit and/or receive data using a variety of communication protocols.

Controller hub **990** generically represents the plurality of system, peripheral, and/or chipset buses, and/or all other circuitry enabling the communication between processor(s) **982** and the rest of the hardware components of computer system **980.** For instance, controller hub **990** may comprise a memory controller, an input/output (I/O) controller, and an interrupt controller. Depending on hardware manufacturer, some such controllers may be incorporated into a single integrated circuit, and/or may be integrated with processor(s) **982.** In another example, controller hub **990** may comprise a northbridge connecting processor **982** to memory **983,** and/or a southbridge connecting processor **982** to devices **984, 985, 986,** and **987.**

The exemplary systems and methods described above facilitate the design and operation of RPA systems, particularly in environments where application execution may be slow and/or unresponsive, such as environments involving virtualization and/or remote execution (e.g. remote desktops, complex website interfaces, other applications running on remote servers, applications running inside virtual machines). In such environments, the loading of a user interface may be slow and unpredictable, such that user interface elements that form the objects of automation steps may not be readily available when needed. In conventional RPA, one or more predetermined (fixed) delays and/or timeouts are set for each activity at design time, for example before and/or after execution of the activity.

It will be clear to one skilled in the art that the above embodiments may be altered in many ways without departing from the scope of the invention. Accordingly, the scope of the invention should be determined by the following claims and their legal equivalents.

## Claims

1. A method comprising employing at least one hardware processor of a computer system to:
receive a workflow specification for a Robotic Process Automation (RPA) workflow to be executed by an RPA robot, the workflow including an activity, the activity acting on an activity target within a user interface;
repeatedly perform a visual comparison of a current user interface screenshot to a design-time baseline screenshot to determine a real-time measure of loading of the user interface, the design-time baseline screenshot representing the user interface in a fully-loaded state; and
initiate a selector search for the activity target within the user interface in response to determining according to the visual comparison that the user interface has sufficiently loaded.

2. The method of claim 1, further comprising employing the at least one hardware processor of the computer system to initiate a timeout interval for the selector search for the activity target upon determining that the user interface has sufficiently loaded.

3. The method of claim 2, wherein the workflow specification designates the activity target as a verification target for determining whether the user interface has fully loaded.

4. The method of claim 1, comprising triggering the visual comparison in response to a pixel change detection within the current user interface screenshot.

5. The method of claim 1, wherein the visual comparison comprises monitoring a presence, positioning, and appearance of multiple elements of the user interface within the current user interface screenshot.

6. The method of claim 1, wherein determining the real-time measure of loading comprises determining a count of user interface elements determined to have loaded.

7. The method of claim 6, wherein determining the real-time measure of loading further comprises identifying a count of user interface elements in a fully loaded state.

8. The method of claim 1, further comprising employing the at least one hardware processor of the computer system to repeatedly perform a textual analysis of the loading of the user interface.

9. The method of claim 1, wherein determining the real-time measure of loading comprises measuring a rate at which user interface elements of the user interface appear within the user interface.

10. The method of claim 9, wherein determining the real-time measure of loading comprises measuring an acceleration characterizing an appearance of user interface elements within the user interface.

11. A computer system comprising at least one hardware processor configured to:
receive a workflow specification for a Robotic Process Automation (RPA) workflow to be executed by an RPA robot, the workflow including an activity, the activity acting on an activity target within a user interface;
repeatedly perform a visual comparison of a current user interface screenshot to a design-time baseline screenshot to determine a real-time measure of loading of the user interface, the design-time baseline screenshot representing the user interface in a fully-loaded state; and
initiate a selector search for the activity target within the user interface in response to determining according to the visual comparison that the user interface has sufficiently loaded.

12. The computer system of claim 11, wherein the at least one hardware processor is further configured to initiate a timeout interval for the selector search for the activity target upon determining that the user interface has sufficiently loaded.

13. The computer system of claim 12, wherein the workflow specification designates the activity target as a verification target for determining whether the user interface has fully loaded.

14. The computer system of claim 11, wherein the at least one hardware processor is configured to trigger the visual comparison in response to a pixel change detection within the current user interface screenshot.

15. The computer system of claim 11, wherein the visual comparison comprises monitoring a presence, positioning, and appearance of multiple elements of the user interface within the current user interface screenshot.
